(19) **Europäisches Patentamt / European Patent Office / Office européen des brevets**

(11) **EP 3 605 891 A1**

(12) **EUROPEAN PATENT APPLICATION**
published in accordance with Art. 153(4) EPC

(43) Date of publication:
**05.02.2020 Bulletin 2020/06**

(51) Int Cl.:
**H04J 99/00** (2009.01)  **H04L 27/26** (2006.01)

(21) Application number: **18772646.8**

(22) Date of filing: **24.01.2018**

(86) International application number:
**PCT/JP2018/002101**

(87) International publication number:
**WO 2018/173466 (27.09.2018 Gazette 2018/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **21.03.2017 JP 2017054865**

(71) Applicant: **Sony Corporation**
**Tokyo 108-0075 (JP)**

(72) Inventors:
• **SHIMEZAWA, Kazuyuki**
**Tokyo 108-0075 (JP)**

• **KIMURA, Ryota**
**Tokyo 108-0075 (JP)**
• **SAWAI, Ryo**
**Tokyo 108-0075 (JP)**
• **HARADA, Hiroshi**
**Kyoto-shi**
**Kyoto 606-8501 (JP)**
• **MIZUTANI, Keiichi**
**Kyoto-shi**
**Kyoto 606-8501 (JP)**
• **KURIKI, Hiroto**
**Kyoto-shi**
**Kyoto 606-8501 (JP)**

(74) Representative: **Witte, Weller & Partner**
**Patentanwälte mbB**
**Postfach 10 54 62**
**70047 Stuttgart (DE)**

(54) **TRANSMISSION DEVICE, RECEPTION DEVICE, WIRELESS COMMUNICATION SYSTEM, AND METHOD AND PROGRAM FOR USE WITH TRANSMISSION DEVICE, RECEPTION DEVICE, AND WIRELESS COMMUNICATION SYSTEM**

(57) In the cellular communication, the transmission efficiency of the entire radio communication system is improved.

In the radio communication system, a transmitting device transmits non-orthogonal frequency division multiplexed signals to a receiving device. The transmitting device includes a compression control unit and a signal generation unit. The compression control unit performs compression control for subcarrier compression to make subcarrier spacing narrower without changing a subcarrier width, for each predetermined resource in a frequency resource. The signal generation unit generates the non-orthogonal frequency division multiplexed signals on the basis of the compression control.

*FIG. 1*

## Description

TECHNICAL FIELD

The present technology relates to a radio communication system. More particularly, the present technology relates to a radio communication system that performs transmission and reception using non-orthogonal frequency division multiplexed signals, a transmitting device and a receiving device included in the radio communication system, and a processing method and a program causing a computer to perform the method.

BACKGROUND ART

In 3rd generation partnership project (3GPP), a radio access scheme and a radio network for 4th generation (4G) and 5th generation (5G) cellular communication are being studied. In the current 4G and 5G, a radio access scheme using orthogonal frequency division multiplexing (OFDM) scheme is adopted. In the OFDM scheme, frequency utilization efficiency is improved by closely arranging a large number of subcarriers so as to be orthogonal to each other.

In particular, in cellular communication of 5G or later, in order to improve communication capacity more than ever, improvement of frequency utilization efficiency is demanded. As a measure, non-orthogonal access schemes have attracted attention. In the non-orthogonal access schemes, frequency utilization efficiency can be improved by arranging resources non-orthogonal to each other while the resources have been conventionally arranged orthogonal to each other. In particular, a non-orthogonal access scheme, in which subcarriers in the frequency domain and/or OFDM symbols in the time domain are compressed have attracted attention as a scheme that can increase theoretical communication capacity by superimposing the subcarriers and/or OFDM symbols at a high density without expanding the radio resources. Furthermore, regarding inter channel interference (ICI) and/or inter symbol interference (ISI) caused by arranging subcarriers and/or OFDM symbols non-orthogonal to each other, the interference is removed at the receiving side so that radio transmission can be realized. Non-orthogonal access schemes in the frequency domain and time domain are disclosed, for example, in Non-Patent Document 1 and Non-Patent Document 2, respectively.

CITATION LIST

NON-PATENT DOCUMENT

Non-Patent Document 1: Tongyang Xu, et al., "Spectrally Efficient FDM: Spectrum Saving Technique for 5G?", 1st International Conference on 5G for Ubiquitous Connectivity, November 2014.
Non-patent document 2: D. Dasalukunte, et al., "Multicarrier Faster-Than-Nyquist Transceivers: Hardware Architecture and Performance Analysis", IEEE Trans. Circuits and Systems, April 2011.

SUMMARY OF THE INVENTION

PROBLEMS TO BE SOLVED BY THE INVENTION

However, no studies have been made on cellular communication using non-orthogonal access schemes in the frequency domain and time domain. In particular, in transmission methods and reception methods of the non-orthogonal access schemes, no studies have been made in consideration of cellular communication, and thus optimal data transmission in cellular communication has not been realized.

The present technology has been made in view of such a situation, and in a communication system in which a base station device and a terminal device communicate with each other, a non-orthogonal access scheme considering cellular communication is optimally designed. Accordingly, it is an object of the present technology to provide a base station device, a terminal device, a communication system, a communication method, and an integrated circuit capable of greatly improving the transmission efficiency of the entire radio communication system.

SOLUTIONS TO PROBLEMS

The present technology has been made to solve the above-mentioned problems, and a first aspect of the present technology is a transmitting device that transmits non-orthogonal frequency division multiplexed signals to a receiving device, the transmitting device including: a compression control unit configured to perform compression control for subcarrier compression to make subcarrier spacing narrower without changing a subcarrier width, for each predetermined resource in a frequency resource; and a signal generation unit configured to generate the non-orthogonal frequency division multiplexed signals on a basis of the compression control, a transmission method and a program of the transmitting device, and a radio communication system including the transmitting device and the receiving device. This configuration provides an effect of transmitting non-orthogonal frequency division multiplexed signals obtained by subcarrier compression.

Furthermore, in the first aspect, the predetermined resource may be determined on the basis of a unit of frequency resource allocated to data transmission. This provides an effect that subcarrier compression is performed for each unit of frequency resources.

Furthermore, in the first aspect, the subcarrier compression may be performed on the basis of information regarding subcarrier compression included in control information. In this case, the control information may be notified from the transmitting device to the receiving device, or may be notified from the receiving device to the transmitting device. Furthermore, the information regarding subcarrier compression may be defined as a combination of information regarding a modulation scheme and a coding rate, and the number of layers, or an antenna port.

Furthermore, in the first aspect, the subcarrier spacing may be arranged at equal spacing in the predetermined resource. In this case, the arrangement of subcarriers may be determined on the basis of the compression ratio.

Furthermore, in the first aspect, the subcarrier spacing may be arranged at unequal spacing in the predetermined resource. In this case, the arrangement of subcarriers may be determined on the basis of subcarriers to which a predetermined signal is mapped. Note that the predetermined signal may be a reference signal. Furthermore, the non-orthogonal frequency division multiplexed signals may be generated by thinning out a predetermined subcarrier from subcarriers arranged at equal spacing in the predetermined resource.

In addition, in the first aspect, the subcarrier compression may be performed on the basis of a transmission path state in the predetermined resource. This provides an effect that adaptive control is performed in accordance with the transmission path state.

Furthermore, a second aspect of the present technology is a receiving device that receives non-orthogonal frequency division multiplexed signals from a transmitting device, the receiving device including: a compression control unit configured to perform compression control for subcarrier compression to make subcarrier spacing narrower without changing a subcarrier width, for each predetermined resource in a frequency resource; and a signal decoding unit configured to decode the non-orthogonal frequency division multiplexed signals on a basis of the compression control, and a reception method and a program of the receiving device. This configuration provides an effect of receiving non-orthogonal frequency division multiplexed signals obtained by subcarrier compression.

Furthermore, in the second aspect, information regarding the subcarrier compression on the basis of on a transmission path state measured using a predetermined reference signal is fed back to the transmitting device. This provides an effect that subcarrier compression is adaptively controlled efficiently.

EFFECTS OF THE INVENTION

According to the present technology, it is possible to achieve an excellent effect of improving the transmission efficiency of the entire radio communication system in cellular communication. Note that, the effect described here is not necessarily limited, and may be any effect described in the present disclosure.

BRIEF DESCRIPTION OF DRAWINGS

Fig. 1 is a diagram illustrating an example of the entire configuration of a communication system according to an embodiment of the present technology.
Fig. 2 is a diagram illustrating a configuration example of a transmission unit 100 according to the embodiment of the present technology.
Fig. 3 is a diagram illustrating a configuration example of another transmission unit 200 according to the embodiment of the present technology.
Fig. 4 is a diagram illustrating a configuration example of the reception unit 300 according to the embodiment of the present technology.
Fig. 5 is a diagram illustrating an example of subcarrier arrangement in NOFDM.
Fig. 6 is an example of a sequence diagram of downlink data transmission, in which compression control of subcarriers according to the embodiment of the present technology is performed.
Fig. 7 is an example of a sequence diagram of uplink data transmission, in which compression control of subcarriers according to the embodiment of the present technology is performed.
Fig. 8 is a diagram illustrating a first example of a compression ratio notification method according to the embodiment of the present technology.
Fig. 9 is a diagram illustrating a second example of the compression ratio notification method according to the embodiment of the present technology.
Fig. 10 is a diagram illustrating a third example of the compression ratio notification method according to the embodiment of the present technology.
Fig. 11 is a diagram illustrating a fourth example of the compression ratio notification method according to the embodiment of the present technology.
Fig. 12 is a diagram illustrating an example of periodic unequally spaced arrangement according to the embodiment of the present technology.
Fig. 13 is a diagram illustrating an example of non-periodic unequally spaced arrangement according to the embodiment of the present technology.
Fig. 14 is a diagram illustrating an example of adaptive control of subcarrier compression in the embodiment of the present technology.
Fig. 15 is a diagram illustrating an example of feedback information indicating combinations of CQIs and information regarding compression in the embodiment of the present technology.

MODE FOR CARRYING OUT THE INVENTION

Hereinafter, an embodiment for implementing the present technology (hereinafter referred to as embodiments) will be described. The description will be given in the following order.

1. Configuration of Communication System
2. Compression Control and Compression Ratio of Subcarriers
3. Notification of Information regarding Compression
4. Subcarrier Arrangement for Compression Control
5. Adaptive Control of Subcarrier Compression

<1. Configuration of Communication System>

[Configuration Example of Communication System]

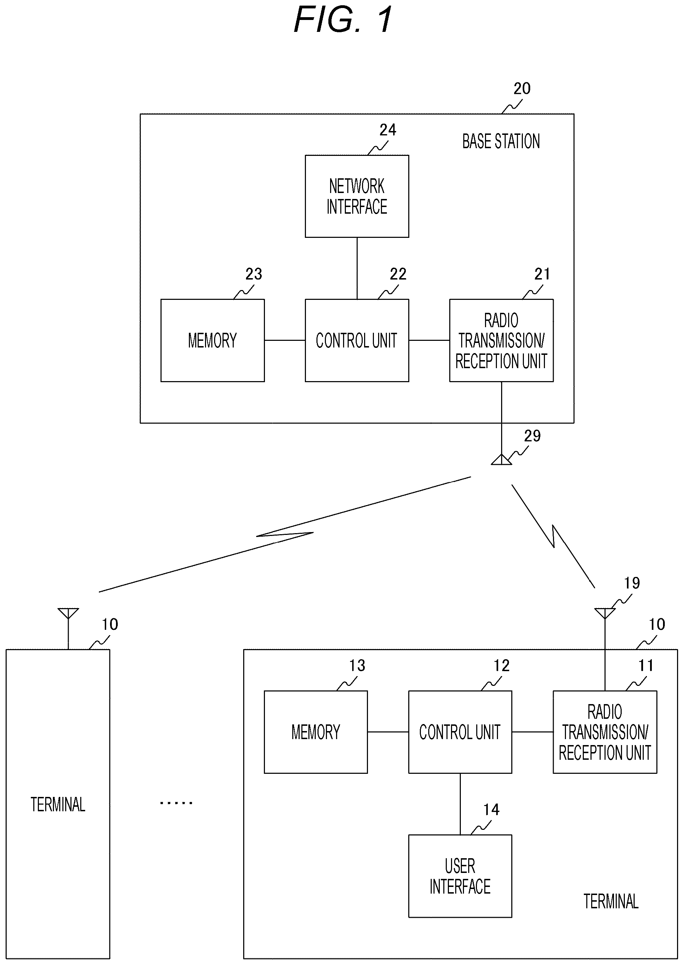

Fig. 1 is a diagram illustrating an example of the entire configuration of a communication system according to an embodiment of the present technology. This communication system performs radio communication using signals of non-orthogonal frequency division multiplexing (NOFDM) which is a non-orthogonal access scheme, in which subcarriers in the OFDM scheme are compressed and transmitted in the frequency domain. The communication system includes a plurality of terminals 10 and a base station 20. The terminals 10 are terminal devices carried by users, and perform radio communication with the base station 20. The base station 20 is a radio communication device managed by a telecommunications carrier, and performs radio communication with the terminals 10.

The terminals 10 each include a radio transmission/reception unit 11, a control unit 12, a memory 13, and a user interface 14.

The radio transmission/reception unit 11 transmits and receives radio signals. The radio transmission/reception unit 11 converts a transmission signal output from the control unit 12 into a radio signal and transmits the signal from an antenna 19. Furthermore, the radio transmission/reception unit 11 converts a radio signal received by the antenna 19 into a reception signal and outputs the reception signal to the control unit 12.

The control unit 12 controls the entire terminal 10. The control unit 12 outputs transmission signals to the radio transmission/reception unit 11 to cause the radio transmission/reception unit 11 to transmit the transmission signals, and receives reception signals received by the radio transmission/reception unit 11. Furthermore, the control unit 12 receives instructions from a user and provides information to a user via the user interface 14. The memory 13 is a memory that stores data, programs, and the like necessary for the operation of the control unit 12.

The user interface 14 manages an interface with a user, and includes, for example, an output unit such as a display or a speaker, and an input unit such as an operation button or a microphone. The user interface 14 outputs an operation signal to the control unit 12 in response to an operation input from a user. Furthermore, the user interface 14 receives information output from the control unit 12 and outputs the information to a user.

The base station 20 includes a radio transmission/reception unit 21, a control unit 22, a memory 23, and a network interface 24.

The radio transmission/reception unit 21 transmits and receives radio signals. The radio transmission/reception unit 21 converts a transmission signal output from the control unit 22 into a radio signal and transmits the radio signal from the antenna 29. Furthermore, the radio transmission/reception unit 21 converts a radio signal received by the antenna 29 into a reception signal and outputs the reception signal to the control unit 22.

The control unit 22 controls the entire base station 20. The control unit 22 outputs the transmission signals to the radio transmission/reception unit 21 to cause the radio transmission/reception unit 21 to transmit the transmission signals, and receives reception signals received by the radio transmission/reception unit 21. Furthermore, the control unit 22 performs transmission and reception with other base stations 20, gateways, and the like via the network interface 24. The memory 23 is a memory that stores data, programs, and the like necessary for the operation of the control unit 22.

The network interface 24 manages transmission and reception with other base stations 20, gateways, and the like. The network interface 24 connects, for example, to another neighboring base station 20 via the X2 interface, and connects to a gateway or the like via the S1 interface.

[Configuration Example of Transmission Unit]

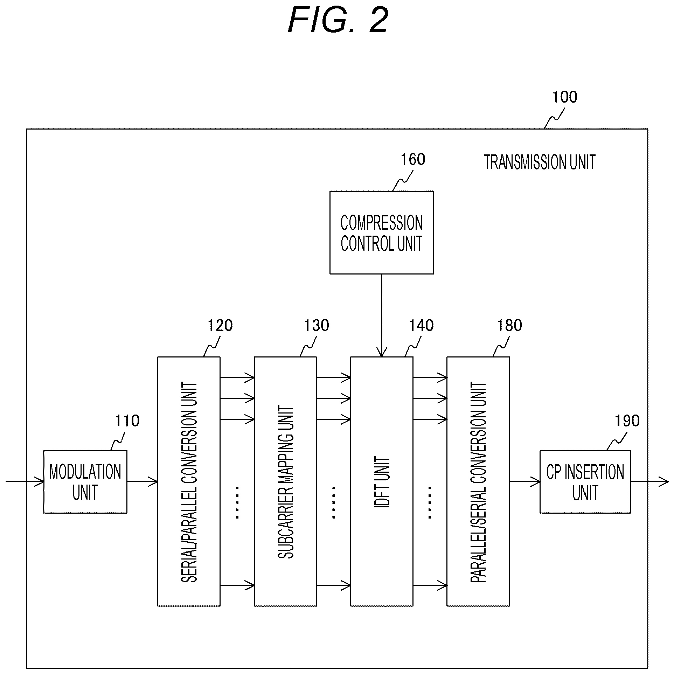

Fig. 2 is a diagram illustrating a configuration example of a transmission unit 100 according to the embodiment of the present technology. The transmission unit 100 is a first example of the transmission function of the radio transmission/reception unit 11 of the terminal 10 and the radio transmission/reception unit 21 of the base station 20, and transmits NOFDM signals.

The transmission unit 100 includes a modulation unit 110, a serial/parallel conversion unit 120, a subcarrier mapping unit 130, an IDFT unit 140, a compression control unit 160, a parallel/serial conversion unit 180, and a CP insertion unit 190.

The modulation unit 110 performs modulation processing such as phase-shift keying (PSK) and quadrature amplitude modulation (QAM) on a signal subjected to error correction coding such as low density parity check (LDPC) code or turbo code.

The serial/parallel conversion unit 120 converts serial signals modulated by the modulation unit 110 into parallel signals. The parallel signals converted by the serial/parallel conversion unit 120 are signals transmitted in one NOFDM symbol.

The subcarrier mapping unit 130 maps signals to be transmitted to subcarriers in NOFDM.

The IDFT unit 140 performs inverse discrete Fourier transform (IDFT) processing on each NOFDM symbol. The compression control unit 160 controls the IDFT processing for subcarrier compression (generation of NOFDM signals) performed by the IDFT unit 140.

Thus, the IDFT unit 140 performs the IDFT processing on the basis of the subcarrier compression determined by the compression control unit 160. Note that the IDFT unit 140 is an example of a signal generation unit described in the claims.

The parallel/serial conversion unit 180 converts parallel signals subjected to the IDFT processing by the IDFT unit 140 into serial signals.

The CP insertion unit 190 inserts a cyclic prefix (CP) of a predetermined length into a serial signal obtained by conversion by the parallel/serial conversion unit 180.

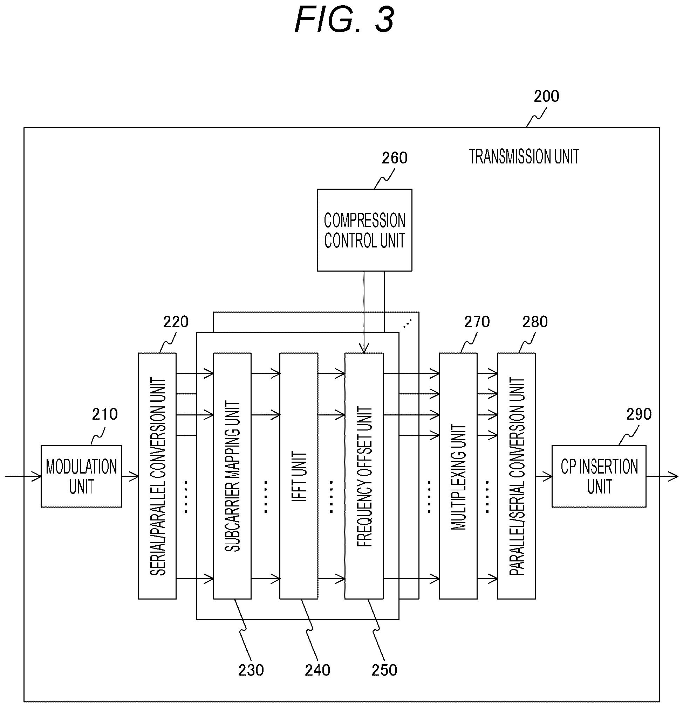

Fig. 3 is a diagram illustrating a configuration example of another transmission unit 200 according to the embodiment of the present technology. The transmission unit 200 is a second example of the transmission function of the radio transmission/reception unit 11 of the terminal 10 and the radio transmission/reception unit 21 of the base station 20, and transmits NOFDM signals.

The transmission unit 200 includes a modulation unit 210, a serial/parallel conversion unit 220, a subcarrier mapping unit 230, an IFFT unit 240, a frequency offset unit 250, a compression control unit 260, a multiplexing unit 270, a parallel/serial conversion unit 280, and a CP insertion unit 290.

The modulation unit 210 performs modulation processing such as PSK and QAM on a signal subjected to error correction coding such as LDPC code or turbo code.

The serial/parallel conversion unit 220 converts serial signals modulated by the modulation unit 210 into parallel signals. On each predetermined number of parallel signals obtained by the conversion by the serial/parallel conversion unit 220, parallel processing is performed. The predetermined number is a number that enables fast Fourier transform (FFT) processing and inverse FFT (IFFT) processing, and the predetermined number is, for example, 2 to the power of n (n is a natural number). In other words, in each part of parallel processing, a signal to be processed can be processed in a manner similarly to normal OFDM. Therefore, the processing time can be shortened compared to the first example.

The subcarrier mapping unit 230 maps signals to be transmitted to subcarriers in NOFDM in each part of parallel processing.

The IFFT unit 240 performs IFFT processing for each OFDM symbol in corresponding part of parallel processing.

The frequency offset unit 250 performs frequency offset such that in each part of parallel processing, corresponding one OFDM symbol becomes a subcarrier corresponding to NOFDM on the basis of subcarrier compression determined by the compression control unit 260. Note that, the frequency offset unit 250 is an example of a signal generation unit described in the claims.

The compression control unit 260 controls the frequency offset processing for subcarrier compression (generation of NOFDM signals) performed by the frequency offset unit 250.

The multiplexing unit 270 multiplexes each of the parallel-processed OFDM symbols into a NOFDM signal.

The parallel/serial conversion unit 280 converts parallel signals multiplexed by the multiplexing unit 270 into serial signals.

The CP insertion unit 290 inserts a CP of a predetermined length into a serial signal obtained by conversion by the parallel/serial conversion unit 280.

In other words, this transmission unit 200 generates NOFDM signals with a compression ratio of 0.5 by, for example, first generating two OFDM signals, and then offsetting one of the OFDM signals to a predetermined frequency so that the compression ratio becomes 0.5.

[Configuration Example of Receiving Unit]

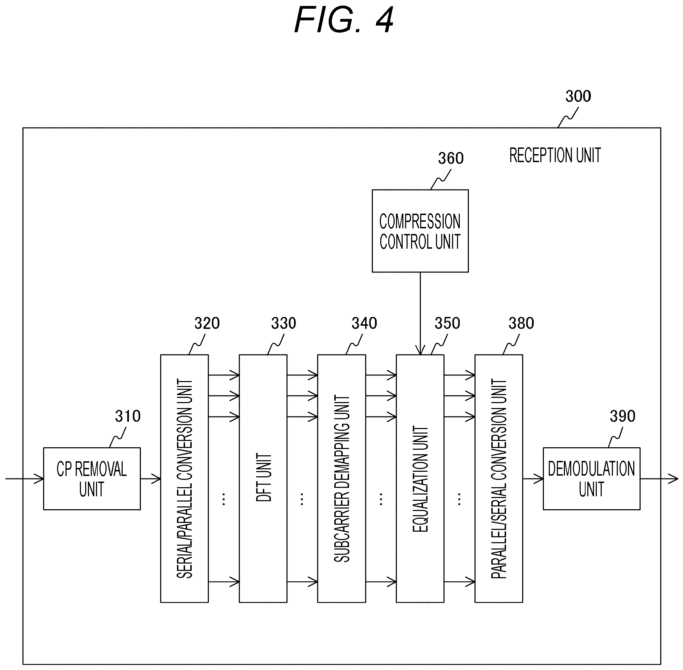

Fig. 4 is a diagram illustrating a configuration example of the reception unit 300 according to the embodiment of the present technology. The reception unit 300 is an example of a reception function of the radio transmission/reception unit 11 of the terminal 10 and the radio transmission/reception unit 21 of the base station 20, and receives NOFDM signals.

The reception unit 300 includes a CP removal unit 310, a serial/parallel conversion unit 320, a DFT unit 330, a subcarrier demapping unit 340, an equalization unit 350, a compression control unit 360, and a parallel/serial conversion unit 380, and a demodulation unit 390.

The CP removal unit 310 removes a CP from a received serial signal. The serial/parallel conversion unit 320 converts serial signals after removal of CPs into parallel signals.

The DFT unit 330 performs discrete Fourier transform (DFT) processing on each NOFDM symbol. The subcarrier demapping unit 340 demaps signals mapped to subcarriers for NOFDM symbols.

The equalization unit 350 performs channel equalization processing, interference cancellation processing, and the like. The compression control unit 360 controls the channel equalization processing, the interference cancellation processing, and the like performed by the equalization unit 350. Thus, the equalization unit 350 performs the channel equalization processing, the interference cancellation processing, and the like on the basis of the control by the compression control unit 360. Note that, the equalization unit 350 is an example of a signal decoding unit described in the claims.

The parallel/serial conversion unit 380 converts parallel signals processed by the equalization unit 350 into serial signals. The demodulation unit 390 demodulates signals subjected to the modulation processing.

Note that various configurations can be used for the receiving function for NOFDM signals although one configuration example of the reception unit 300 has been described here.

<2. Compression Control and Compression Ratio of Subcarrier>

In NOFDM, the compression ratio in the frequency domain can be made variable. Here, the subcarrier width is a frequency width that is occupied by one subcarrier in the frequency domain (that expands in the frequency domain). The subcarrier spacing is the spacing between adjacent subcarriers in the frequency domain. For example, the subcarrier spacing is the frequency spacing between peak values of adjacent subcarriers. In this embodiment, subcarrier compression means narrowing of the subcarrier spacing (making the subcarrier spacing narrower) without changing the subcarrier width as compared to normal OFDM.

In this embodiment, the compression ratio indicates the degree of compression when normal OFDM is regarded as NOFDM with a compression ratio of 0. For example, OFDM with a subcarrier width of 30 kHz is considered. In this case, the subcarriers are orthogonal to each other by arranging the subcarriers at a subcarrier spacing of 15 kHz. In a case where the subcarriers are arranged at a subcarrier spacing of 7.5 kHz, NOFDM with a compression ratio of 0.5 is obtained.

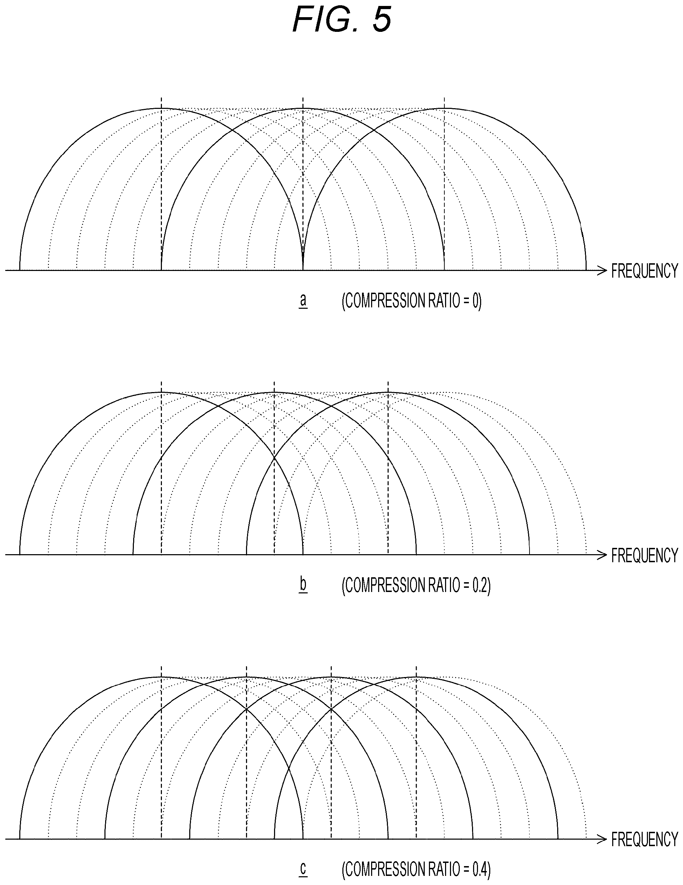

Fig. 5 is a diagram illustrating an example of subcarrier arrangement in NOFDM. The portion a of the drawing illustrates an example of subcarrier arrangement when the compression ratio is 0. The portion b of the drawing illustrates an example of subcarrier arrangement when the compression ratio is 0.2. The portion c of the drawing illustrates an example of subcarrier arrangement when the compression ratio is 0.4.

In NOFDM, as the compression ratio is higher, the number of subcarriers transmitted in a predetermined frequency domain is increased, so the frequency utilization efficiency is higher and the communication capacity is increased. On the other hand, as the compression ratio is higher, the inter-carrier interference is larger. The inter-carrier interference can be cancelled (reduced) by an interference canceller performing reception processing on the reception side. However, the accuracy of the interference cancellation depends on the reception state such as the signal-to-noise ratio (SNR) or the signal-to-interference and noise ratio (SINR) of the reception signal.

In cellular communication, one base station 20 accommodates one or more terminals 10 and performs data transmission. The reception states at terminals 10 differ from each other depending on the positional relationship with the base station 20, the influence of interference with surroundings, and the like. Therefore, the optimal compression ratio or compression method is determined for each terminal 10. In other words, in the cellular communication using NOFDM, the frequency utilization efficiency for each terminal 10 and the entire cell of the base station 20 can be improved by compression control of subcarriers performed by the base station 20 optimally for each terminal 10.

Furthermore, compression control of subcarriers can be performed individually on predetermined frequency resources. Here, the predetermined frequency resource may be the system bandwidth of the base station 20, the minimum unit of a frequency resource used for data transmission, the frequency resource defined in advance in a specification, a frequency that is set uniquely to the base station 20 or uniquely to the terminal 10, or the like. Furthermore, this predetermined frequency resource may be a frequency resource or a resource block (RB) allocated to the terminal 10 for data transmission. Moreover, processing such as filtering for suppressing inter-carrier interference due to compression control of subcarriers may be performed outside the predetermined frequency resource.

<3. Notification of Information regarding Compression>

In a case where the base station 20 controls compression of subcarriers uniquely to the terminal 10, the terminal 10 performs reception processing on the compressed subcarriers in the downlink, and performs transmission processing by compressing the subcarriers in the uplink. The terminal 10 needs to recognize the arrangement (position, mapping) of subcarriers in downlink data and uplink data. Therefore, the base station 20 notifies the terminal 10 of information regarding compression for downlink data and uplink data of the terminal 10.

[Data Transmission Sequence]

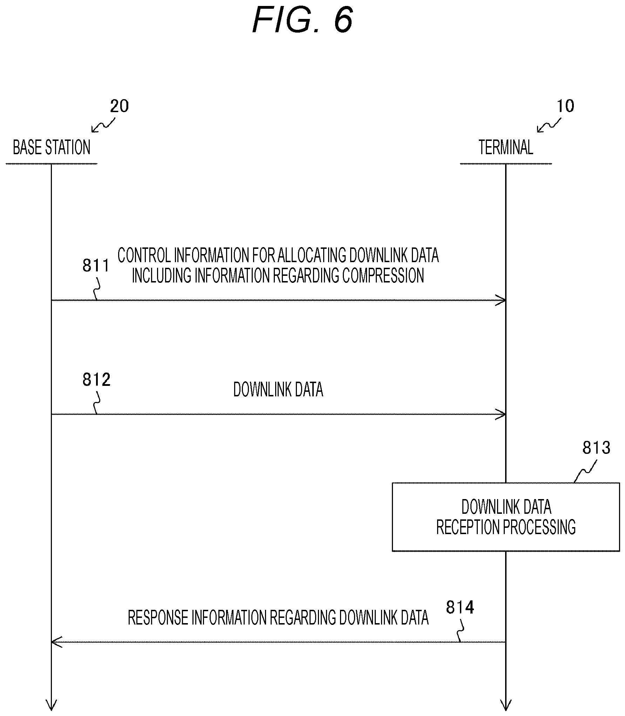

Fig. 6 is an example of a sequence diagram of downlink data transmission, in which compression control of subcarriers according to the embodiment of the present technology is performed. The base station 20 transmits control information for allocating (scheduling) downlink data (downlink control information (DCI)) to the terminal 10 through the downlink control channel (811). The DCI includes information regarding compression for downlink data. Thereafter, the base station 20 transmits downlink data (812).

On the basis of the DCI, the terminal 10 receives the downlink data transmitted (812) from the base station 20 through a downlink shared channel and performs reception processing (813) including demodulation processing and interference cancellation processing. In the reception processing, the terminal 10 can recognize the arrangement of compressed subcarriers and the like on the basis of the notified information regarding compression.

Furthermore, after performing the reception processing (813) of the downlink data, the terminal 10 notifies the base station 20 of response information indicating whether the downlink data has been correctly received through an uplink control channel or an uplink shared channel (814). This response information is also referred to as acknowledgement / negative acknowledgement (A/N) information.

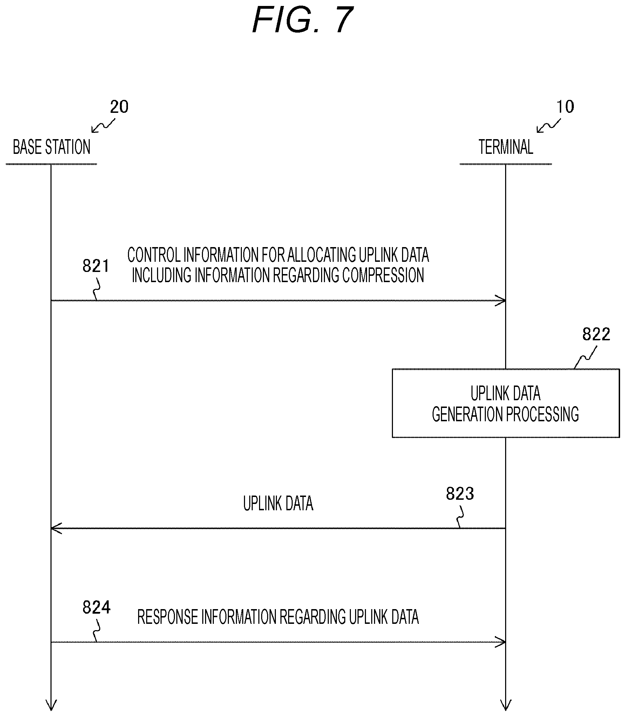

Fig. 7 is an example of a sequence diagram of uplink data transmission, in which compression control of subcarriers according to the embodiment of the present technology is performed. The base station 20 transmits control information for allocating (scheduling) uplink data (DCI) to the terminal 10 through the downlink control channel (821). The DCI includes information regarding compression for uplink data.

The terminal 10 generates uplink data on the basis of the DCI (822). In the generation processing, the terminal 10 performs arrangement, compression, and the like of subcarriers in the uplink data on the basis of the notified information regarding compression.

The terminal 10 transmits the generated uplink data to the base station 20 through the uplink shared channel (823).

In addition, the base station 20 receives the uplink data, and notifies the terminal 10 of response information indicating whether the uplink data has been correctly received through the downlink control channel (824) .

In the above-described example, the case where information regarding compression is notified dynamically through a physical channel (physical layer) has been described, but the way of notification is not limited to this. For example, information regarding compression can be notified semi-statically to the physical layer through an upper layer. The upper layer is, for example, a media access control (MAC) layer or a radio resource control (RRC) layer. Alternatively, information regarding compression can be notified in a combination of the physical layer and the upper layer.

In each of downlink data transmission and uplink data transmission, compression control of subcarriers can be individually performed for each unit of predetermined frequency resources, and can be adaptively performed according to transmission path state and the like. Details will be described below.

[Notification of Information regarding Compression in a case of Adaptive Control]

In a case where adaptive control of subcarrier compression is performed for each predetermined frequency resource for downlink data or uplink data, information regarding compression may be notified by the following method in addition to the method already described. Here, an example of the notification method in the physical layer and an example of the notification method in the combination of the physical layer and the upper layer will be described.

[Notification Method through Physical Layer]

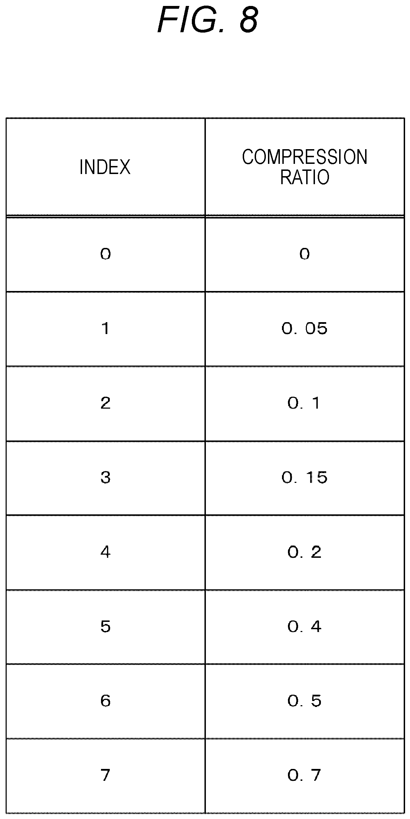

Fig. 8 is a diagram illustrating a first example of a compression ratio notification method according to the embodiment of the present technology. Information regarding compression can be notified as a single piece of information. In this example, information indicating the compression ratio (index) is defined in advance, and the information is illustrated. At this time, as illustrated in the drawing, in an area where the compression ratio is low, the step size can be set small, and in an area where the compression ratio is high, the step size can be set large.

Although the index is used in this example, the information regarding compression may indicate the compression ratio itself.

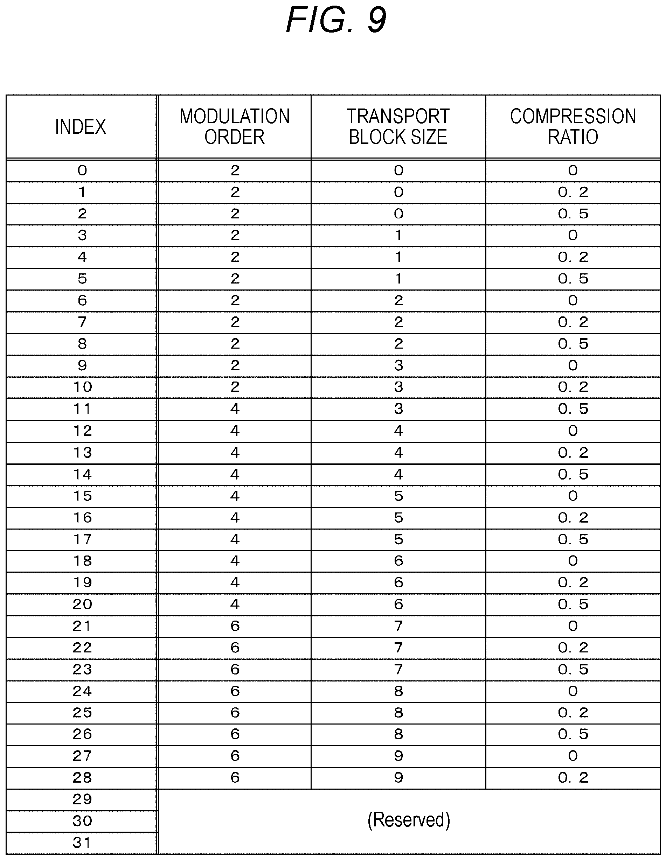

Fig. 9 is a diagram illustrating a second example of the notification method of the compression ratio according to the embodiment of the present technology. In this example, a combination of modulation and coding scheme (MCS) and information regarding compression is defined in advance, and information indicating the combination (index) is notified. In this example, 32 combinations are defined, and 5-bit information indicating any of them is notified. Here, a modulation order indicates the number of bits that can be transmitted in one modulation symbol in the modulation scheme. For example, if the modulation order is "2", the modulation order indicates binary PSK (BPSK), if the modulation order is "4", quadrature PSK (QPSK) is indicated, and if the modulation order is "6", the modulation order indicates 16QAM. A transport block size is information indicating the number of information bits included in the transport block, which is a unit of encoding processing.

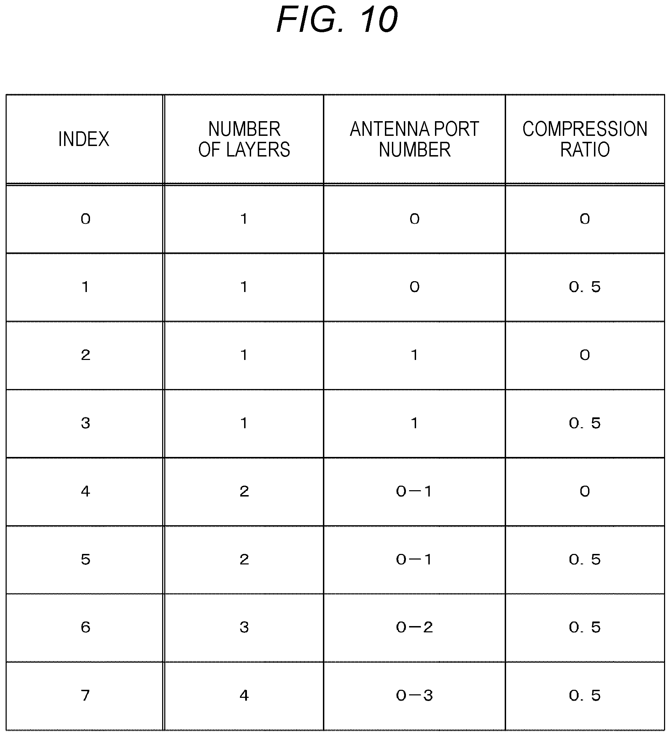

Fig. 10 is a diagram illustrating a third example of the notification method of the compression ratio according to the embodiment of the present technology. In this example, a combination of the number of layers (the multiplex number of MIMO), the antenna port, and information regarding compression is defined in advance, and information (index) indicating the combination is notified. In this example, 16 combinations are defined, and 4-bit information indicating any of them is notified. Here, the number of layers is the space multiplex number of multi-input multi-output (MIMO). The antenna port number is a port number of the transmission antenna, and is used to determine a demodulation reference signal of transmission data.

[Notification Method through Combination of Physical layer and Upper layer]

The physical layer and an upper layer can be combined in notifying information regarding compression. For example, one compression ratio is notified in control information of the upper layer, and one bit indicating whether to transmit by NOFDM of the compression ratio or by normal OFDM (that is, NOFDM with a compression ratio of 0) is notified by the physical layer. In other words, in this example, what is notified by the physical layer is one bit indicating whether to use NOFDM.

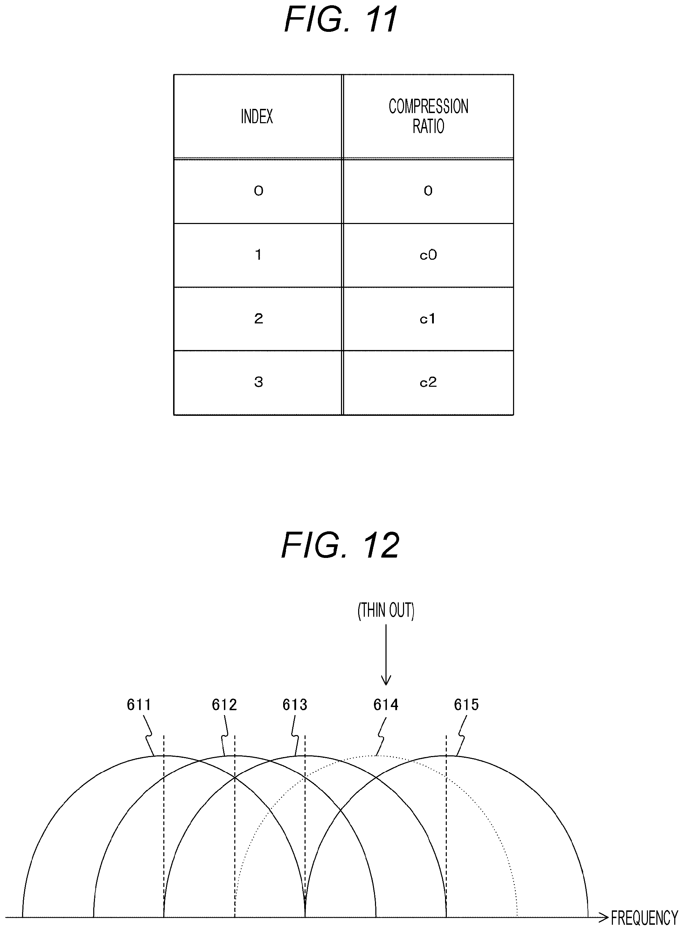

Fig. 11 is a diagram illustrating a fourth example of the notification method of the compression ratio according to the embodiment of the present technology. In this example, a list of a plurality of possible compression ratios is notified by the upper layer as information regarding compression, and a compression ratio (index) from the list to be used is notified by the physical layer. The list can include transmission by normal OFDM. In this example, the list of possible compression ratios indicates the compression ratio values 0, c0, c1, and c2 corresponding to the indexes. This list is notified by the upper layer, and the index is notified by the physical layer.

<4. Subcarrier Arrangement for Compression Control>

In performing compression control on subcarriers in NOFDM, various methods can be used for arranging the subcarriers (mapping methods) as follows.

Here, the definition of the compression ratio in NOFDM will be described. The compression ratio c in a case where subcarriers of NOFDM are arranged at equal spacing is expressed by the following expression. In the expression, a is the subcarrier width and b is the subcarrier spacing.

$$c = 1 - (2b/a)$$

In addition, the compression ratio in a case where NOFDM subcarriers are arranged at unequal spacing is represented by an average value in a predetermined frequency domain. The average value may be determined on the basis of the above-described expression.

[Method of Arranging Subcarriers at Equal Spacing depending on Compression Ratio]

When the subcarriers are arranged at equal spacing depending on the compression ratio, as described with reference to Fig. 5, the subcarriers are arranged to provide a predetermined compression ratio in a predetermined frequency resource. In this case, when the compression ratio is known, the terminal 10 can determine arrangement of the subcarriers. Therefore, the information regarding compression can be information indicating the compression ratio for a predetermined frequency resource.

[Method of Arranging Subcarriers at Unequal Spacing]

When the subcarriers are arranged at unequal spacing, periodic unequal spacing and non-periodic unequal spacing can be considered as described below.

Fig. 12 is a diagram illustrating an example of periodic unequally spaced arrangement according to the embodiment of the present technology. In this example, the unequally spaced arrangement is made by thinning out subcarriers at predetermined period from NOFDM subcarriers arranged at equal spacing. Here, unequally spaced arrangement of subcarriers obtained by periodically thinning out one subcarrier 614 of four consecutive subcarriers 611 to 614 from NOFDM subcarriers at a compression ratio of 0.5 is illustrated. That is, the subcarrier 615 is arranged next to the subcarrier 613. The compression ratio in this case is about 0.25.

In this case, the information regarding compression can be information indicating the compression ratio in NOFDM before thinning out, the ratio of periodic thinning out, and the like. In addition, the compression ratio in NOFDM before thinning out may be set in advance, or set semi-statically in an upper layer. When subcarriers are periodically thinned out, the compression ratio may be notified dynamically.

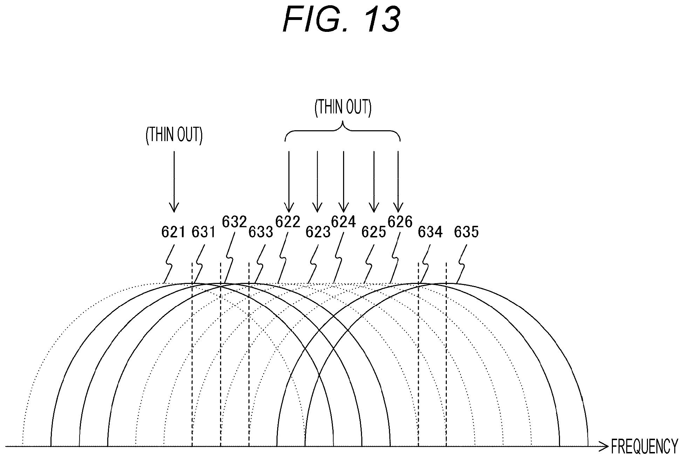

Fig. 13 is a diagram illustrating an example of non-periodic unequally spaced arrangement according to the embodiment of the present technology. In this example, the unequally spaced arrangement is made by thinning out subcarriers 621 to 626 non-periodically from NOFDM subcarriers 621 to 635 arranged at equal spacing. Here, unequally-spaced arrangement of subcarriers obtained by non-periodically thinned out subcarriers from NOFDM subcarriers at a compression ratio of 0.2 is illustrated.

In this case, the information regarding compression can be information indicating the compression ratio in NOFDM before thinning out and subcarriers to be thinned out (or subcarriers not to be thinned out). Furthermore, the compression ratio in NOFDM before thinning out may be set in advance or set semi-statically in an upper layer. In addition, information indicating subcarriers to be thinned out (or subcarriers not to be thinned out) may be notified dynamically.

In addition, the information indicating subcarriers to be thinned out (or subcarriers not to be thinned out) may be a pattern defined in advance, or may be information in a bitmap format indicating whether to thin out each subcarrier (each set of a predetermined number of subcarriers).

Moreover, such a non-periodically thinning out method is a method suitable for adaptively mapping according to transmission path characteristic.

Also, as another example of non-periodic unequal spacing according to the embodiment of the present technology, the arrangement or compression ratio of subcarriers may be determined depending on the type of data transmitted on a predetermined subcarrier, the type of channel, and the type of signals. That is, the arrangement or compression ratio of subcarriers is determined depending on the importance (priority) of data, channel, or signals.

For example, when data is transmitted at a predetermined compression ratio on a predetermined frequency resource, a reference signal for demodulating the data are transmitted in multiplex on predetermined subcarriers in the predetermined frequency resource. The reference signal is an important signal for demodulation, and thus it is preferable to be transmitted while reducing inter-carrier interference as much as possible. Therefore, subcarriers are arranged such that the compression ratio of subcarriers used for transmission of the reference signal is reduced compared to data.

<5. Adaptive Control of Subcarrier Compression>

In NOFDM, adaptive control of subcarrier compression can be performed for each predetermined frequency resource. Here, the predetermined frequency resource may be determined on the basis of the unit of frequency resource allocated to data transmission. For example, the predetermined frequency resource is a resource block. Alternatively, the predetermined frequency resource is, for example, a resource that is a predetermined number of times the frequency resource allocated to data transmission.

[Relationship between Adaptive Control of Subcarrier Compression and Transmission Path State]

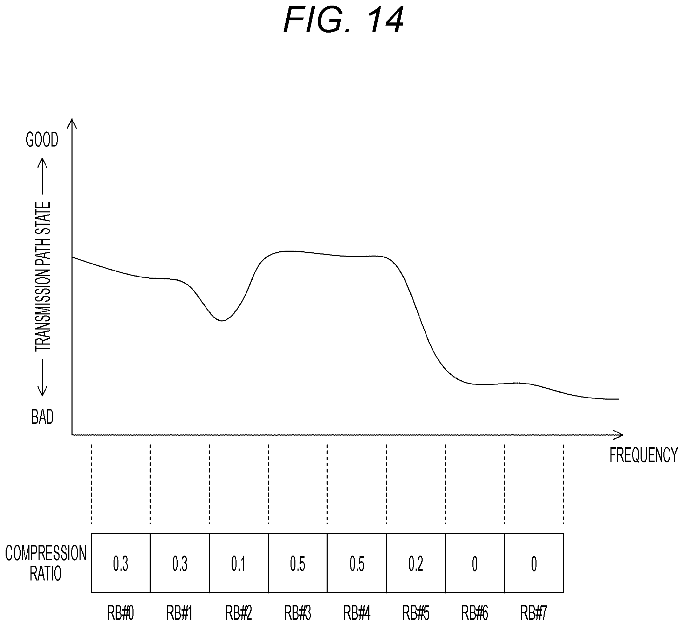

Fig. 14 is a diagram illustrating an example of adaptive control of subcarrier compression in the embodiment of the present technology. Here, an example of adaptive control of subcarrier compression for eight resource blocks is illustrated. Here, the characteristic illustrated in the upper portion illustrates the transmission path state in the frequency domain. In addition, eight resource blocks RB #0 to #7 illustrated in the lower portion correspond to the frequency in the upper portion. For example, for the resource blocks RB #3 and #4, the transmission path state is good. Thus, the resource blocks are transmitted at a high compression ratio to improve communication capacity. For the resource blocks RB #6 and #7, the transmission path state is bad. Thus, the resource blocks are transmitted without being compressed to improve reception characteristic.

As described above, optimal data transmission can be realized by adaptively controlling the compression ratio in accordance with the transmission path state in the frequency domain.

[Feedback of Transmission Path State for Adaptive Control of Subcarrier Compression]

The terminal 10 preferably feeds back (reports) information regarding transmission path state in order to adaptively control subcarrier compression described above efficiently. For example, the terminal 10 reports recommended channel state information (CSI) to the base station 20.

The CSI includes a channel quality indicator (CQI), a precoding matrix indicator (PMI), a rank indicator (RI), a CSI resource indicator (CRI), or information regarding subcarrier compression.

The RI indicates the number of transmission layers (rank number). The PMI is information indicating a precoding matrix defined in advance or information regarding beamforming. The CQI is information indicating a combination of a modulation scheme and a coding rate defined in advance. The CRI is information indicating one CSI-RS resource selected from two or more CSI-RS resources when the two or more CSI-RS resources are set.

The information regarding compression is information indicating compression ratio, compression pattern, or the like. The information regarding compression may be notified as other information different from CSI.

In addition, information regarding compression may be included in other CSI and notified. For example, information (index) indicating a combination of RI, PMI, CQI or CRI and information regarding compression is notified as RI, PMI, CQI or CRI, respectively.

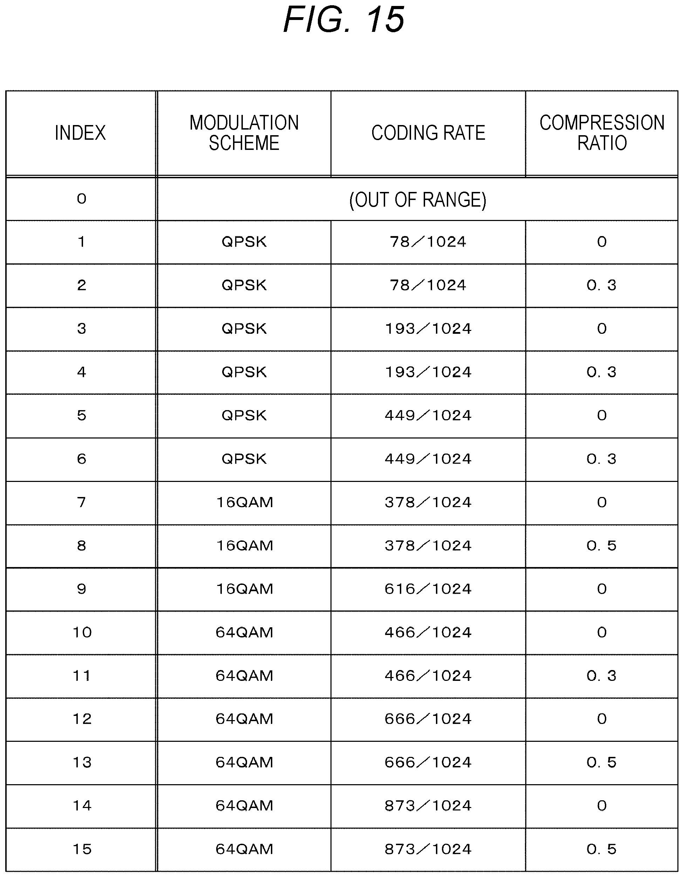

Fig. 15 is a diagram illustrating an example of feedback information indicating combinations of CQIs and information regarding compression in the embodiment of the present technology. In the example, the compression ratio is included in information bits of the CQI. Thus, the information bits required to notify the compression ratio are reduced as compared to a case where the compression ratio is notified alone.

In addition, the terminal 10 can report the CSI assuming a predetermined compression ratio. For example, the terminal 10 may be configured such that one compression ratio is set to the terminal 10 by the base station 20, the terminal 10 generates the RI, PMI, CQI and/or CRI on the basis of the compression ratio, and the terminal 10 feeds it back to the base station 20.

Thus, in the embodiment of the present technology, subcarrier compression is performed on an NOFDM signals for each predetermined resource in a frequency resource to make the subcarrier spacing narrower without changing the subcarrier width. As a result, compression control optimal for cellular communication can be performed, and frequency utilization efficiency can be improved.

It is to be noted that the above-described embodiments are provided as examples for embodying the present technology, and matters in the embodiment and matters to define the invention in the claims have correspondence relationships, respectively. Similarly, the matters to define the invention in the claims and the matters in the embodiments of the present technology denoted by the same names have correspondence relationships, respectively. However, the present technology is not limited to the embodiments, and can be embodied by various modifications of the embodiments without departing from the gist of the present technology.

In addition, processing steps described in the above-described embodiments may be regarded as a method having these series of steps, and as a program for causing a computer to execute the series of steps or a recording medium for storing the program. As this recording medium, for example, a compact disc (CD), a minidisc (MD), a digital versatile disc (DVD), a memory card, a Blu-ray (registered trademark) disc, or the like can be used.

It should be noted that the effects described in the present description are merely examples, and are not intended to limit the effects, and other effects may be provided.

The present technology can also be configured as follows.

(1) A transmitting device that transmits non-orthogonal frequency division multiplexed signals to a receiving device, the transmitting device including:

a compression control unit configured to perform compression control for subcarrier compression to make subcarrier spacing narrower without changing a subcarrier width, for each predetermined resource in a frequency resource; and a signal generation unit configured to generate the non-orthogonal frequency division multiplexed signals on a basis of the compression control.

(2) The transmitting device according to (1), in which the predetermined resource is determined on a basis of a unit of frequency resource allocated to data transmission.

(3) The transmitting device according to (1) or (2), in which the subcarrier compression is performed on a basis of information regarding subcarrier compression included in control information.

(4) The transmitting device according to (3), in which the control information is notified from the transmitting device to the receiving device.

(5) The transmitting device according to (3), in which the control information is notified from the receiving device to the transmitting device.

(6) The transmitting device according to (3), in which the information regarding subcarrier compression is defined as a combination of information regarding a modulation scheme and a coding rate, and the number of layers, or an antenna port.

(7) The transmitting device according to (1), in which the subcarrier spacing is arranged at equal spacing in the predetermined resource.

(8) The transmitting device according to (1), in which the subcarrier spacing is arranged at unequal spacing in the predetermined resource.

(9) The transmitting device according to (8), in which arrangement of the subcarriers is determined on a basis of a subcarrier to which a predetermined signal is mapped.

(10) The transmitting device according to (9), in which the predetermined signal is a reference signal.

(11) The transmitting device according to (8), in which the non-orthogonal frequency division multiplexed signals are generated by thinning out a predetermined subcarrier from subcarriers arranged at equal spacing in the predetermined resource.

(12) The transmitting device according to (1), in which the subcarrier compression is performed on a basis of a transmission path state in the predetermined resource.

(13) A receiving device that receives non-orthogonal frequency division multiplexed signals from a transmitting device, the receiving device including:

a compression control unit configured to perform compression control for subcarrier compression to make subcarrier spacing narrower without changing a subcarrier width, for each predetermined resource in a frequency resource; and a signal decoding unit configured to decode the non-orthogonal frequency division multiplexed signals on a basis of the compression control.

(14) The receiving device according to (13), in which information regarding the subcarrier compression based on a transmission path state measured using a predetermined reference signal is fed back to the transmitting device.

(15) A radio communication system including: a transmitting device that transmits non-orthogonal frequency division multiplexed signals; and a receiving device that receives the non-orthogonal frequency division multiplexed signals transmitted from the transmitting device, in which the transmitting device includes:

a compression control unit configured to perform compression control for subcarrier compression to make subcarrier spacing narrower without changing a subcarrier width, for each predetermined resource in a frequency resource; and a signal generation unit configured to generate the non-orthogonal frequency division multiplexed signals on a basis of the compression control.

(16) A transmission method of a transmitting device that transmits non-orthogonal frequency division multiplexed signals to a receiving device, the transmission method including:

performing compression control for subcarrier compression to make subcarrier spacing narrower without changing a subcarrier width, for each predetermined resource in a frequency resource; and generating the non-orthogonal frequency division multiplexed signals on a basis of the compression control.

(17) A reception method of a receiving device that receives non-orthogonal frequency division multiplexed signals from a transmitting device, the reception method including:

performing compression control for subcarrier compression to make subcarrier spacing narrower without changing a subcarrier width, for each predetermined resource in a frequency resource; and
decoding the non-orthogonal frequency division multiplexed signals on a basis of the compression control.

(18) A program to be executed by a computer of a transmitting device to cause the transmitting device to transmit non-orthogonal frequency division multiplexed signals to a receiving device, the program causing the computer to perform:

compression controlling for subcarrier compression to make subcarrier spacing narrower without changing a subcarrier width, for each predetermined resource in a frequency resource; and
generating the non-orthogonal frequency division multiplexed signals on a basis of the compression control.

(19) A program to be executed by a computer of a transmitting device to cause the transmitting device to receive non-orthogonal frequency division multiplexed signals from the transmitting device, the program causing the computer to perform:

compression controlling for subcarrier compression to make subcarrier spacing narrower without changing a subcarrier width, for each predetermined resource in a frequency resource; and
decoding the non-orthogonal frequency division multiplexed signals on a basis of the compression control.

REFERENCE SIGNS LIST

| | |
|---|---|
| 10 | terminal |
| 11 | radio transmission/reception unit |
| 12 | control unit |
| 13 | memory |
| 14 | user interface |
| 19 | antenna |
| 20 | base station |
| 21 | radio transmission/reception unit |
| 22 | control unit |
| 23 | memory |
| 24 | network interface |
| 29 | antenna |
| 100, 200 | transmission unit |
| 110, 210 | modulation unit |
| 120, 220 | serial/parallel conversion unit |
| 130, 230 | subcarrier mapping unit |
| 140 | inverse discrete Fourier transform (IDFT) unit |
| 160, 260 | compression control unit |
| 180, 280 | parallel/serial conversion unit |
| 190, 290 | CP insertion unit |
| 240 | inverse fast Fourier transform (IFFT) unit |
| 250 | frequency offset unit |
| 270 | multiplexing unit |
| 300 | transmission unit |
| 310 | CP removal unit |
| 320 | serial/parallel conversion unit |
| 330 | discrete Fourier transform (DFT) unit |
| 340 | subcarrier demapping unit |
| 350 | equalization unit |
| 360 | compression control unit |
| 380 | parallel/serial conversion unit |
| 390 | demodulation unit |

**Claims**

1. A transmitting device that transmits non-orthogonal frequency division multiplexed signals to a receiving device, the transmitting device comprising:

a compression control unit configured to perform compression control for subcarrier compression to make subcarrier spacing narrower without changing a subcarrier width, for each predetermined resource in a frequency resource; and
a signal generation unit configured to generate the non-orthogonal frequency division multiplexed signals on a basis of the compression control.

2. The transmitting device according to claim 1, wherein the predetermined resource is determined on a basis of a unit of frequency resource allocated to data transmission.

3. The transmitting device according to claim 1, wherein the subcarrier compression is performed on a basis of information regarding subcarrier compression included in control information.

4. The transmitting device according to claim 3, wherein the control information is notified from the transmitting device to the receiving device.

5. The transmitting device according to claim 3, wherein the control information is notified from the receiving device to the transmitting device.

6. The transmitting device according to claim 3, wherein the information regarding subcarrier compression is defined as a combination of information regarding a modulation scheme and a coding rate, and the number of layers, or an antenna port.

7. The transmitting device according to claim 1, wherein the subcarrier spacing is arranged at equal spacing in the predetermined resource.

8. The transmitting device according to claim 1, wherein the subcarrier spacing is arranged at unequal spacing in the predetermined resource.

9. The transmitting device according to claim 8, wherein arrangement of the subcarriers is determined on a basis of a subcarrier to which a predetermined signal is mapped.

10. The transmitting device according to claim 9, wherein the predetermined signal is a reference signal.

11. The transmitting device according to claim 8, wherein the non-orthogonal frequency division multiplexed signals are generated by thinning out a predetermined subcarrier from subcarriers arranged at equal spacing in the predetermined resource.

12. The transmitting device according to claim 1, wherein the subcarrier compression is performed on a basis of a transmission path state in the predetermined resource.

13. A receiving device that receives non-orthogonal frequency division multiplexed signals from a transmitting device, the receiving device comprising:

a compression control unit configured to perform compression control for subcarrier compression to make subcarrier spacing narrower without changing a subcarrier width, for each predetermined resource in a frequency resource; and a signal decoding unit configured to decode the non-orthogonal frequency division multiplexed signals on a basis of the compression control.

14. The receiving device according to claim 13, wherein information regarding the subcarrier compression based on a transmission path state measured using a predetermined reference signal is fed back to the transmitting device.

15. A radio communication system comprising: a transmitting device that transmits non-orthogonal frequency division multiplexed signals; and a receiving device that receives the non-orthogonal frequency division multiplexed signals transmitted from the transmitting device, wherein the transmitting device includes:

a compression control unit configured to perform compression control for subcarrier compression to make subcarrier spacing narrower without changing a subcarrier width, for each predetermined resource in a frequency resource; and a signal generation unit configured to generate the non-orthogonal frequency division multiplexed signals on a basis of the compression control.

16. A transmission method of a transmitting device that transmits non-orthogonal frequency division multiplexed signals to a receiving device, the transmission method comprising:

performing compression control for subcarrier compression to make subcarrier spacing narrower without changing a subcarrier width, for each predetermined resource in a frequency resource; and generating the non-orthogonal frequency division multiplexed signals on a basis of the compression control.

17. A reception method of a receiving device that receives non-orthogonal frequency division multiplexed signals from a transmitting device, the reception method comprising:

performing compression control for subcarrier compression to make subcarrier spacing narrower without changing a subcarrier width, for each predetermined resource in a frequency resource; and decoding the non-orthogonal frequency division multiplexed signals on a basis of the compression control.

18. A program to be executed by a computer of a transmitting device to cause the transmitting device to transmit non-orthogonal frequency division multiplexed signals to a receiving device, the program causing the computer to perform:

compression control for subcarrier compression to make subcarrier spacing narrower without changing a subcarrier width, for each predetermined resource in a frequency resource; and generating the non-orthogonal frequency division multiplexed signals on a basis of the compression control.

19. A program to be executed by a computer of a transmitting device to cause the transmitting device to receive non-orthogonal frequency division multiplexed signals from the transmitting device, the program causing the computer to perform:

compression control for subcarrier compression to make subcarrier spacing narrower without changing a subcarrier width, for each predetermined resource in a frequency resource; and decoding the non-orthogonal frequency division multiplexed signals on a basis of the compression control.

# FIG. 1

20

BASE STATION

24

NETWORK
INTERFACE

23

MEMORY

22

CONTROL UNIT

21

RADIO
TRANSMISSION/
RECEPTION UNIT

29

19

10

TERMINAL

· · · · ·

10

13

MEMORY

12

CONTROL UNIT

11

RADIO
TRANSMISSION/
RECEPTION UNIT

14

USER
INTERFACE

TERMINAL

# FIG. 2

100
TRANSMISSION UNIT

160
COMPRESSION CONTROL UNIT

120
SERIAL/PARALLEL CONVERSION UNIT

130
SUBCARRIER MAPPING UNIT

140
IDFT UNIT

180
PARALLEL/SERIAL CONVERSION UNIT

110
MODULATION UNIT

190
CP INSERTION UNIT

# FIG. 3

# FIG. 4

# FIG. 5

a  (COMPRESSION RATIO = 0)

b  (COMPRESSION RATIO = 0.2)

c  (COMPRESSION RATIO = 0.4)

# FIG. 6

# FIG. 7

20

10

BASE STATION

TERMINAL

821 CONTROL INFORMATION FOR ALLOCATING UPLINK DATA
INCLUDING INFORMATION REGARDING COMPRESSION

822

UPLINK DATA
GENERATION PROCESSING

823 UPLINK DATA

824 RESPONSE INFORMATION REGARDING UPLINK DATA

# FIG. 8

| INDEX | COMPRESSION RATIO |
|:-----:|:-----------------:|
| 0 | 0 |
| 1 | 0. 05 |
| 2 | 0. 1 |
| 3 | 0. 15 |
| 4 | 0. 2 |
| 5 | 0. 4 |
| 6 | 0. 5 |
| 7 | 0. 7 |

# FIG. 9

| INDEX | MODULATION ORDER | TRANSPORT BLOCK SIZE | COMPRESSION RATIO |
|---|---|---|---|
| 0 | 2 | 0 | 0 |
| 1 | 2 | 0 | 0. 2 |
| 2 | 2 | 0 | 0. 5 |
| 3 | 2 | 1 | 0 |
| 4 | 2 | 1 | 0. 2 |
| 5 | 2 | 1 | 0. 5 |
| 6 | 2 | 2 | 0 |
| 7 | 2 | 2 | 0. 2 |
| 8 | 2 | 2 | 0. 5 |
| 9 | 2 | 3 | 0 |
| 10 | 2 | 3 | 0. 2 |
| 11 | 4 | 3 | 0. 5 |
| 12 | 4 | 4 | 0 |
| 13 | 4 | 4 | 0. 2 |
| 14 | 4 | 4 | 0. 5 |
| 15 | 4 | 5 | 0 |
| 16 | 4 | 5 | 0. 2 |
| 17 | 4 | 5 | 0. 5 |
| 18 | 4 | 6 | 0 |
| 19 | 4 | 6 | 0. 2 |
| 20 | 4 | 6 | 0. 5 |
| 21 | 6 | 7 | 0 |
| 22 | 6 | 7 | 0. 2 |
| 23 | 6 | 7 | 0. 5 |
| 24 | 6 | 8 | 0 |
| 25 | 6 | 8 | 0. 2 |
| 26 | 6 | 8 | 0. 5 |
| 27 | 6 | 9 | 0 |
| 28 | 6 | 9 | 0. 2 |
| 29 | | (Reserved) | |
| 30 | | | |
| 31 | | | |

# FIG. 10

| INDEX | NUMBER OF LAYERS | ANTENNA PORT NUMBER | COMPRESSION RATIO |
|---|---|---|---|
| 0 | 1 | 0 | 0 |
| 1 | 1 | 0 | 0. 5 |
| 2 | 1 | 1 | 0 |
| 3 | 1 | 1 | 0. 5 |
| 4 | 2 | 0−1 | 0 |
| 5 | 2 | 0−1 | 0. 5 |
| 6 | 3 | 0−2 | 0. 5 |
| 7 | 4 | 0−3 | 0. 5 |

# FIG. 11

| INDEX | COMPRESSION RATIO |
|:-----:|:-----------------:|
| 0 | 0 |
| 1 | $c0$ |
| 2 | $c1$ |
| 3 | $c2$ |

# FIG. 12

(THIN OUT)

611    612    613    614    615

→ FREQUENCY

# FIG. 13

# FIG. 14

| COMPRESSION RATIO | 0.3 | 0.3 | 0.1 | 0.5 | 0.5 | 0.2 | 0 | 0 |
|---|---|---|---|---|---|---|---|---|
| | RB#0 | RB#1 | RB#2 | RB#3 | RB#4 | RB#5 | RB#6 | RB#7 |

# FIG. 15

| INDEX | MODULATION SCHEME | CODING RATE | COMPRESSION RATIO |
|---|---|---|---|
| 0 | (OUT OF RANGE) | | |
| 1 | QPSK | 78／1024 | 0 |
| 2 | QPSK | 78／1024 | 0. 3 |
| 3 | QPSK | 193／1024 | 0 |
| 4 | QPSK | 193／1024 | 0. 3 |
| 5 | QPSK | 449／1024 | 0 |
| 6 | QPSK | 449／1024 | 0. 3 |
| 7 | 16QAM | 378／1024 | 0 |
| 8 | 16QAM | 378／1024 | 0. 5 |
| 9 | 16QAM | 616／1024 | 0 |
| 10 | 64QAM | 466／1024 | 0 |
| 11 | 64QAM | 466／1024 | 0. 3 |
| 12 | 64QAM | 666／1024 | 0 |
| 13 | 64QAM | 666／1024 | 0. 5 |
| 14 | 64QAM | 873／1024 | 0 |
| 15 | 64QAM | 873／1024 | 0. 5 |

**INTERNATIONAL SEARCH REPORT**

| International application No. |
| --- |
| PCT/JP2018/002101 |

A.  CLASSIFICATION OF SUBJECT MATTER
Int.Cl. H04J99/00(2009.01)i, H04L27/26(2006.01)i

According to International Patent Classification (IPC) or to both national classification and IPC

B.  FIELDS SEARCHED

Minimum documentation searched (classification system followed by classification symbols)
Int.Cl. H04J99/00, H04L27/26

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
IEEE Xplore

C.  DOCUMENTS CONSIDERED TO BE RELEVANT

| Category* | Citation of document, with indication, where appropriate, of the relevant passages | Relevant to claim No. |
| --- | --- | --- |
| X<br><br>Y<br><br><br><br><br>Y | 栗木寛斗，水谷圭一，松村武，原田博司，サブキャリア間隔圧縮 FDM 方式における時間領域等化法，電子情報通信学会技術研究報告， 22 February 2017, vol. 116, no. 481, pp. 123-128, (KURIKI, Hiroto, MIZUTANI, Keiichi, MATSUMURA, Takeshi, HARADA, Hiroshi, "Time-domain Equalization Scheme for Subcarrier Interval Compressed FDM", IEICE technical report)<br><br>WO 2016/103831 A1 (SONY CORP.) 30 June 2016, paragraphs [0147]-[0159], fig. 15, 16 & US 2017/0325238 A1, paragraphs [0178]-[0190], fig. 15, 16 & EP 3240216 A1 | 1-2, 7, 13, 15-19<br>3-6, 8-12, 14<br><br><br><br>3-6 |

☒  Further documents are listed in the continuation of Box C.    ☐  See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 03 April 2018 (03.04.2018) | 10 April 2018 (10.04.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

International application No.

PCT/JP2018/002101

C (Continuation).　DOCUMENTS CONSIDERED TO BE RELEVANT

| Category* | Citation of document, with indication, where appropriate, of the relevant passages | Relevant to claim No. |
|---|---|---|
| Y | JP 2011-119845 A (NIPPON TELEGRAPH AND TELEPHONE CORP.) 16 June 2011, paragraphs [0021]-[0025], fig. 2 (Family: none) | 8-11 |
| Y | JP 2007-159066 A (SANYO ELECTRIC CO., LTD.) 21 June 2007, paragraphs [0033]-[0036], [0046]-[0055], fig. 3, 5 & US 2007/0133701 A1, paragraphs [0046]- [0049], [0059]-[0068], fig. 4A, 4B, 4C, 6 & CN 1992702 A | 12, 14 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TONGYANG XU et al.** Spectrally Efficient FDM: Spectrum Saving Technique for 5G?. *1st International Conference on 5G for Ubiquitous Connectivity,* November 2014

- **D. DASALUKUNTE et al.** Multicarrier Faster-Than-Nyquist Transceivers: Hardware Architecture and Performance Analysis. *IEEE Trans. Circuits and Systems,* April 2011